# EUROPÄISCHE PATENTSCHRIFT

(11) **EP 2 864 602 B1**
(45) Veröffentlichungstag und Bekanntmachung des Hinweises auf die Patenterteilung: **13.07.2016**
(21) Anmeldenummer: 13724208.7
(22) Anmeldetag: 13.05.2013
(51) Int. Cl.: F01N 3/20, F01N 3/22, F01N 3/30

(54) **DOSIERSYSTEM ZUR EINDÜSUNG EINES REDUKTIONSMITTELS IN EINE ABGASLEITUNG EINER BRENNKRAFTMASCHINE**
METERING SYSTEM FOR INTRODUCING A REDUCING AGENT INTO AN EXHAUST CONDUIT OF AN INTERNAL COMBUSTION ENGINE
SYSTÈME DE DOSAGE DESTINÉ À INJECTER UN RÉDUCTEUR DANS UNE CONDUITE D'ÉCHAPPEMENT D'UN MOTEUR À COMBUSTION INTERNE

(30) Priorität: 22.06.2012 DE 102012210631
(43) Veröffentlichungstag der Anmeldung: 29.04.2015
(73) Patentinhaber: Robert Bosch GmbH, 70442 Stuttgart (DE)
(72) Erfinder: BURGER, Matthias, 71711 Murr (DE); TROMPETER, Franz-Josef, 71691 Freiberg Am Neckar (DE)
(86) Internationale Anmeldenummer: PCT/EP2013/059770
(87) Internationale Veröffentlichungsnummer: WO 2013/189660

(56) Entgegenhaltungen:
- EP-A2- 2 505 804
- DE-A1-102009 029 188
- GB-A- 2 363 084
- US-A1- 2005 252 201
- US-A1- 2010 115 932

## Beschreibung

Die vorliegende Erfindung betrifft ein Dosiersystem zur Eindüsung eines Reduktionsmittels, insbesondere einer Harnstoff-Wasser-Lösung, in eine Abgasleitung einer Brennkraftmaschine, wobei das Dosiersystem zumindest einen mit einem Sprührohr über zumindest eine Dosiermittelpumpe verbundenen Reduktionsmitteltank aufweist, wobei weiterhin eine Luftpumpe zur Erzeugung von Druckluft vorgesehen ist und wobei die Eindüsung des Reduktionsmittels druckluftunterstützt erfolgt. Weiterhin betrifft die Erfindung ein Verfahren zum Betreiben eines solchen Dosiersystems.

### Stand der Technik

Ein solches Dosiersystem ist aus der DE 10 2009 016 810 A1 bekannt. Dieses Dosiersystem weist eine Dosiermittelpumpe auf, die beispielsweise eine Kolbenpumpe oder eine Membranpumpe ist und die bezüglich ihrer Förderleistung verstellbar in geeigneter Weise beispielsweise von einem Pleuel oder Stößel angetrieben wird. Die Dosiermittelpumpe fördert Reduktionsmittel in eine Zweistoffdüse, die in eine Abgasleitung einer Brennkraftmaschine eingesetzt ist. Weiterhin ist eine Luftpumpe zur Erzeugung von Druckluft vorgesehen, die in eine ebenfalls mit der Zweistoffdüse verschaltete Druckluftleitung, die mit der Ladeluftleitung der Brennkraftmaschine verbunden ist, eingesetzt ist. Bei dem in der DE 10 2009 016 810 A1 beschriebenen Dosiersystem wird normalerweise die Druckluft aus der Ladeluftleitung der Brennkraftmaschine entnommen. Steht nicht genügend Ladeluft zur Verfügung, wird die Luftpumpe zur Bereitstellung von Druckluft hinzugezogen. Dieses in der DE 10 2009 016 810 A1 beschriebene Dosiersystem ist bauaufwendig und regelungsaufwendig.

Ein weiteres Dosiersystem ist aus der WO 2008/031421 A1 bekannt. Das entsprechende Abgasnachbehandlungssystem weist eine Dosiermittelpumpe auf, die als stößelbetätigte Membranpumpe ausgebildet ist. Dabei wird der Stößel beispielsweise elektromagnetisch hin und her bewegt und die so erzeugte Bewegung wird auf die Membran zur Förderung von Reduktionsmittel übertragen. Die so ausgebildete Membranpumpe weist im Betrieb an den gegenüberliegenden Membranseiten deutliche Druckunterschiede auf, die zu einer erhöhten Belastung der Membran führen. Die Druckunterschiede rühren daher, dass auf der "Arbeitsseite" der Membran das Reduktionsmittel entweder in der Saugphase oder in der Druckphase befindet, während die gegenüberliegende Seite der Membran mit der Umgebung verschaltet ist. Ein weiteres Dosiersystem ist aus der US 2005252201 bekannt.

Der Erfindung liegt die Aufgabe zu Grunde, ein Dosiersystem zur Eindüsung eines Reduktionsmittels in eine Abgasleitung bereitzustellen, das sich durch einen einfachen Aufbau auszeichnet. Weiterhin soll ein Verfahren zum Betreiben eines solchen Dosiersystems angegeben werden.

### Offenbarung der Erfindung

### Vorteile der Erfindung

Diese Aufgabe wird dadurch gelöst, dass die Dosiermittelpumpe druckluftbetätigt ist. Besonders vorteilhaft ist es dabei, wenn die Luftpumpe eine Druckluftquelle für die Bereitstellung von Druckluft für die druckluftunterstützte Eindüsung des Reduktionsmittels und die Druckluftbetätigung der Dosiermittelpumpe ist. Die Druckluftbetätigung der Dosiermittelpumpe hat den Vorteil, dass kein zusätzlicher elektrischer oder mechanischer Antrieb der Dosiermittelpumpe benötigt wird. Die für die Eindüsung des Reduktionsmittels benötigte Druckluft wird von der Luftpumpe bereitgestellt, die als Druckluftquelle zudem die für die Betätigung der Dosiermittelpumpe benötigte Druckluft erzeugt. Durch den Wegfall eines elektrischen oder mechanischen Antriebs für die Dosiermittelpumpe wird nur noch die in geeigneter Weise zu betätigende beziehungsweise anzutreibende Luftpumpe benötigt. Durch diese Ausgestaltung können die Systemkosten erheblich reduziert werden.

Das entsprechende Verfahren zum Betreiben eines Dosiersystems sieht vor, dass die Dosiermittelpumpe als Druckluftquelle die Druckluft für die druckluftunterstützte Eindüsung und für eine Druckluftbetätigung der druckluftbetätigten Dosiermittelpumpe bereitstellt. Auch durch dieses Verfahren werden die zuvor dargestellten Vorteile hinsichtlich des Aufbaus des Dosiersystems erreicht. Zudem wird dadurch, dass nur eine Druckluftquelle die Druckluft zum Betreiben von zwei Vorrichtungen bereitstellt, die Steuerung und Regelung des Dosiersystems vereinfacht.

In Weiterbildung der Erfindung ist die Dosiermittelpumpe eine Membranpumpe. Eine solche Membranpumpe ist für eine Druckluftbetätigung besonders geeignet, indem die Antriebsseite der Membran mit druckpulsierender Druckluft beaufschlagt wird und die Membran somit hin und her bewegt wird. Dadurch, dass die Membranpumpe druckluftbetrieben ist und keine weitere Kraft an der Membran angreift, herrscht auf beiden Seiten der Membran der gleiche Druck: Aufgrund dieser Eigenschaft ist die Bauteillebensdauer der Membranpumpe erheblich erhöht.

Gemäß der Erfindung ist die Luftpumpe eine eine Saugleitung und eine Druckleitung aufweisende Kolbenpumpe. Durch die Auf- und Abbewegung des Pumpenkolbens erzeugt die Kolbenpumpe druckpulsierende Druckluft. Infolgedessen ist eine Kolbenpumpe besonders geeignet, da keine weiteren Vorrichtungen zur Erzeugung einer Pulsation oder Taktung der Druckluft nötig ist. Weiterhin erfolgt die Druckluftbeaufschlagung des Sprührohrs beziehungsweise einer nachfolgend noch beschriebenen Mischkammer ebenfalls getaktet. Dadurch wird im Unterschied von konstant mit Druckluft versorgten Systemen weniger Druckluft benötigt.

In Weiterbildung der Erfindung ist die Dosiermittelpumpe in die Luftpumpe integriert. Diese Ausgestaltung ermöglicht eine besonders kompakte Baueinheit ohne zusätzliche Verbindungsleitungen für Druckluft zwischen der Luftpumpe und der Dosiermittelpumpe.

In weiterer Ausgestaltung der Erfindung ist in einen Druckluftanschluss der Dosiermittelpumpe ein Ventil, insbesondere ein 2/2-Wegeventil, eingeschaltet.

Mit einem solchen Ventil kann die Dosiermittelpumpe von der Luftpumpe getrennt werden. Auf diese Weise kann der Arbeitstakt der Dosiermittelpumpe gegenüber dem Kompressortakt der Luftpumpe geändert, insbesondere reduziert werden.

Gemäß der Erfindung ist eine Mischkammer vorgesehen, die mit der Dosiermittelpumpe und der Luftpumpe verschaltet ist. Die Mischkammer wird in der Nähe eines in eine Abgasleitung einer Brennkraftmaschine eingebauten Sprührohres angeordnet. In der Mischkammer wird das eingebrachte Reduktionsmittel mit der zugeführten Druckluft gemischt und durch das Sprührohr in die Abgasleitung eingedüst und dort fein zerstäubt. Die in die Abgasleitung eingedüste Mischung von Reduktionsmittel und Druckluft löst in einem stromabwärts des Sprührohres in die Abgasleitung eingesetzten Katalysators gewünschte chemische Reaktionen aus, indem in dem heißen Abgas und auf dem Katalysator sich Ammoniakgas bildet, mit dem in dem Katalysator NOX selektiv reduziert werden kann. Dabei ist der Bauaufwand einer solchen Mischkammer überschaubar und das so ausgebildete Dosiersystem ist zumindest weitgehend eisdruckfest, da bei einer Außerbetriebsetzung der Brennkraftmaschine und somit des Dosiersystems das in der Mischkammer um das Sprührohr befindliche Reduktionsmittel in die Abgasleitung ausgeblasen wird. Die geringe ausgeblasene Menge an Reduktionsmittel hat keinen nachteiligen Einfluss auf das Betriebsverhalten des Dosiersystems bzw. der Brennkraftmaschine.

In Weiterbildung der Erfindung ist in die Druckleitung ein Druckluftspeicher eingeschaltet. Ein Druckluftspeicher dämpft luftseitig Druckspitzen der Druckluft. Weiterhin wird dadurch ein kontinuierlicher Luftstrom an dem Sprührohr ermöglicht. Schließlich steht dadurch auch bei einem Not-Aus der Brennkraftmaschine und somit auch des Dosiersystems genügend Luft für einen Ausblasvorgang der Mischkammer und des Sprührohres zur Verfügung.

In weiterer Ausgestaltung der Erfindung ist in die Saugleitung und die Druckleitung je ein Rückschlagventil eingesetzt. Zusätzlich ist in weiterer Ausgestaltung der Erfindung in die Saugleitung und die Druckleitung jeweils eine Drossel eingesetzt. Diese Drosseln gestalten den Hub der Dosiermittelpumpe robuster aus, da dadurch die Druck- bzw. Saugamplitude an der Dosiermittelpumpe verstärkt wird. Die Drosseln können entfallen, wenn der Luftpfad des Systems durch andere Komponenten gedrosselt ist. Anstelle der Drosseln können in vorteilhafter Weise auch die Rückschlagventile mit Rückstellfedern ausgestattet werden, und zwar in der Form, dass die Druck- und Saugamplitude hierüber eingestellt wird.

Die Dosiermittelpumpe fördert immer ein genau definiertes Volumen. Dies ist dadurch begründet, dass sich die Membrane in den Endstellungen immer exakt an die Gehäusewand der Dosiermittelpumpe anlegt. Dies wird in vorteilhafter Weise durch die Ansteuerung der Dosiermittelpumpe mit Luftüberdruck bzw. Luftunterdruck, der durch die Kolbenpumpe erzeugt wird, erreicht. Dadurch ist die Membrane zudem immer spannungsfrei, was die Lebensdauer in vorteilhafter Weise erhöht. Der Volumenstrom wird über die Ansteuerfrequenz der Luftpumpe oder aber durch das Ventil eingestellt. Ist kein Ventil vorhanden, ist ein festes Verhältnis zwischen gefördertem Luftvolumenstrom zu dem Reduktionsmittelstrom vorgegeben. Dies ist dadurch begründet, dass der Reduktionsmittelvolumenstrom durch die Taktfrequenz der Luftpumpe eingestellt wird. Die erfindungsgemäße Vorrichtung kann unabhängig von der Dosiermenge stets mit dem maximalen Luftdruck arbeiten, was in allen Betriebspunkten zu einer guten Zerstäubung führt. Gerade bei kleinen Dosiermengen kann es bei herkömmlichen Systemen, insbesondere einem DNOx-System, erforderlich sein, den Luftdruck stark zu reduzieren, um ein "Austrocknen" und Auskristallisieren der Harnstoff-Wasser-Lösung zu verhindern. Bei dem erfindungsgemäßen System kann der Luftstrom bei unverändert hohem Druckniveau über die Taktlänge der Druckluftimpulse eingestellt werden. Somit wird in allen Betriebspunkten eine gute Zerstäubung gewährleistet und gleichzeitig ein Austrocken der Harnstoff-Wasser-Lösung verhindert.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Kurzbeschreibung der Zeichnungen

Es zeigen:
- Figur 1: in schematischer Darstellung das Abgassystem einer Brennkraftmaschine,
- Figur 2: ein erfindungsgemäßes Dosiersystem in einer ersten Ausführungsform und
- Figur 3: ein erfindungsgemäßes Dosiersystem in einer zweiten Ausführungsform.

### Ausführungsformen der Erfindung

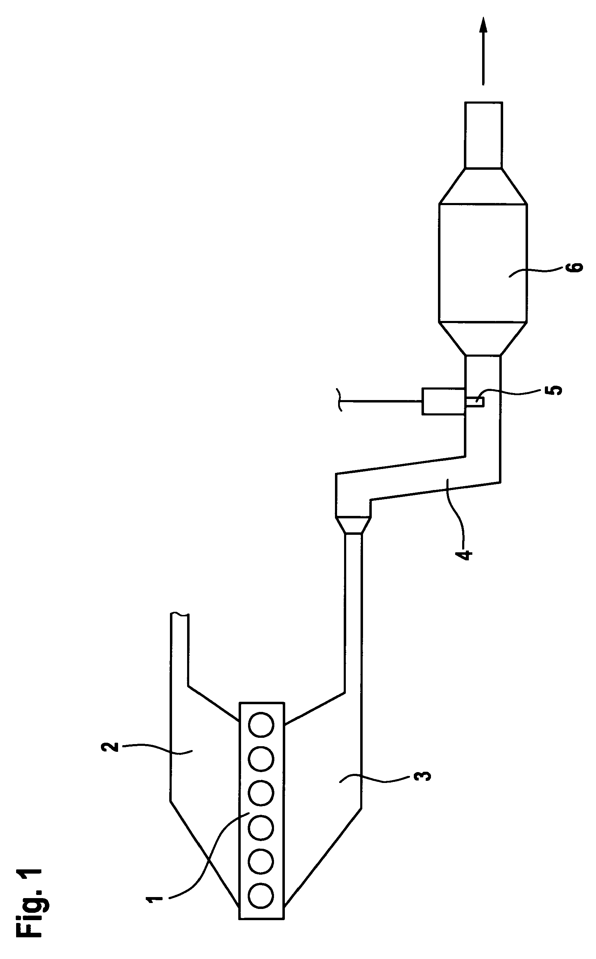

Figur 1 zeigt eine Brennkraftmaschine 1 mit einem Ansaugkrümmer 2 und einem Abgaskrümmer 3. Durch den Ansaugkrümmer 2 wird der Brennkraftmaschine 1 Brennluft zugeführt, die in den einzelnen Arbeitsräumen der Brennkraftmaschine 1 zusammen mit eingespritztem Kraftstoff, insbesondere in Form von Dieselkraftstoff, verbrannt wird, um die Kolben der Brennkraftmaschine 1 für eine Erzeugung einer Drehbewegung der Kurbelwelle der Brennkraftmaschine 1 zu bewegen. Das Abgas der Verbrennung wird durch den Abgaskrümmer 3 in eine Abgasleitung 4 eingeleitet, und dort zur Reduzierung von schädlichen Abgasemissionen gezielt nachbehandelt. Insbesondere ist bei Diesel-Fahrzeugen eine NOX-Reduzierung in dem Abgas erwünscht, die durch eine selektive katalytische Reduktion (SCR) ermöglicht wird. Bei einer solchen selektiven katalytischen Reduktion wird ein Reduktionsmittel, insbesondere eine Harnstoff-Wasser-Lösung über ein Sprührohr 5 in die Abgasleitung 4 eingesprüht. In dem heißen Abgas entwickelt sich Ammoniakgas, mit dem NOX in einem nachfolgenden Katalysator 6 selektiv reduziert werden kann.

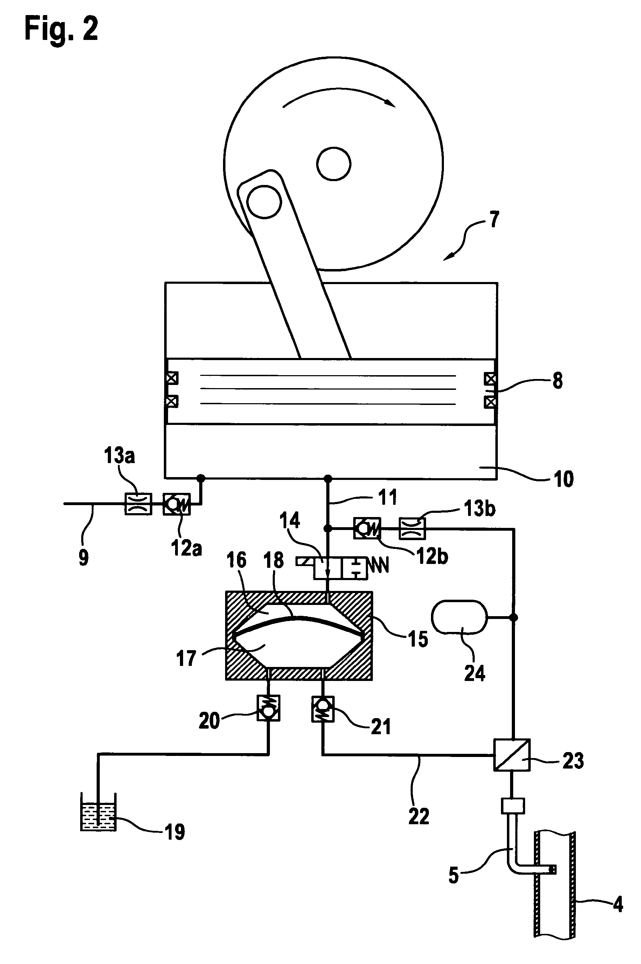

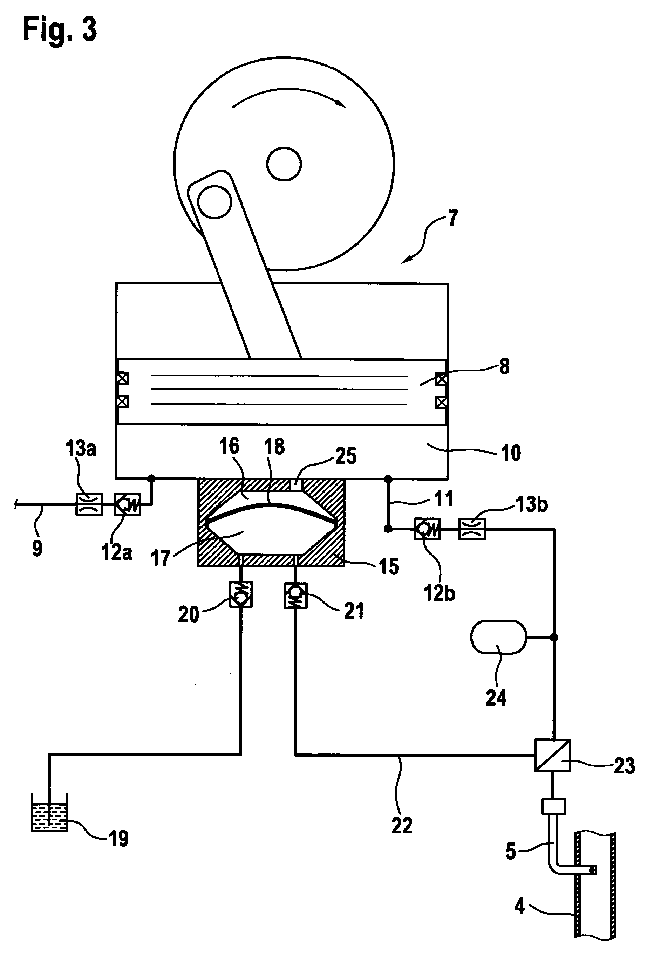

Das Dosiersystem zur Eindüsung des Reduktionsmittels durch das Sprührohr 5 in die Abgasleitung 4 ist in den Figuren 2 und 3 dargestellt. Das Dosiersystem besteht unter anderem zunächst einmal aus einer Luftpumpe 7 in Form einer Kolbenpumpe. Die Kolbenpumpe weist einen auf und ab bewegten Pumpenkolben 8 auf, der über eine Saugleitung 9 bei einer Aufwärtsbewegung des Pumpenkolbens 8 Luft in einen Kompressionsraum 10 ansaugt und bei einer Abwärtsbewegung des Pumpenkolbens 8 die angesaugte Luft aus dem Kompressionsraum 10 in eine Druckleitung 11 fördert. In die Saugleitung 9 sind ein Rückschlagventil 12a und optional eine Drossel 13a eingeschaltet, während in die Druckleitung 11 ebenfalls ein Rückschlagventil 12b und optional eine Drossel 13b eingeschaltet sind. Das Rückschlagventil 12b kann gegebenenfalls entfallen. Ein Strang der Druckleitung 11 ist über ein optionales Ventil 14, das als 2/2-Wegeventil ausgebildet ist, mit einer Dosiermittelpumpe 15, die als Membranpumpe ausgebildet ist, verschaltet. Die Dosiermittelpumpe 15 weist eine Betätigungskammer 16 und eine Arbeitskammer 17 auf, die durch eine Membran 18 voneinander getrennt sind.

Bei auf Durchgang geschalteten Ventil 14 wird die Betätigungskammer 16 von der Luftpumpe 7 periodisch mit Luft gefüllt und entleert. Dabei wird die Membran 18 der Dosiermittelpumpe 15 abwechseln an die obere und untere Wand der Dosiermittelpumpe 15 bewegt. Durch diese periodische Bewegung der Membran 18 wird in den Arbeitsraum 17 aus einem Reduktionsmitteltank 19 Reduktionsmittel über ein Saugventil 20 angesaugt und über ein Rückschlagventil 21 in eine Reduktionsmitteldruckleitung 22 gefördert. Die Reduktionsmitteldruckleitung 22 ist mit einer Mischkammer 23 verschaltet, die weiterhin mit einem Strang der Druckleitung 11 verbunden ist. In die Druckleitung 11 kann optional ein Druckluftspeicher 24 eingesetzt sein.

Beim Betrieb der Vorrichtung wird der Mischkammer 23 sowohl Reduktionsmittel als auch Druckluft zugeführt, wobei in der Mischkammer 23 die Druckluft mit dem Reduktionsmittel gemischt wird und das so erzeugte Gemisch über das Sprührohr 5 in die Abgasleitung 4 fein zerstäubt eingedüst wird.

Die Ausführungsform gemäß Figur 3 unterscheidet sich von der Ausführungsform gemäß Figur 1 dadurch, dass die Dosiermittelpumpe 15 als Baueinheit mit der Luftpumpe 7 ausgebildet ist und direkt an den Kompressionsraum 10 angrenzt. Der Betätigungsraum 16 ist über eine Verbindungsleitung 25 direkt mit dem Kompressionsraum 10 verbunden. Der weitere Aufbau entspricht dem zuvor beschriebenen Dosiersystem.

## Patentansprüche

1. Dosiersystem zur Eindüsung eines Reduktionsmittels, insbesondere einer Harnstoff-Wasser-Lösung, in eine Abgasleitung (4) einer Brennkraftmaschine (1), wobei das Dosiersystem einen mit einem Sprührohr (5) über zumindest eine Dosiermittelpumpe (15) verbundenen Reduktionsmitteltank (19) aufweist, wobei weiterhin eine Luftpumpe (7) zur Erzeugung von Druckluft vorgesehen ist, und die Eindüsung des Reduktionsmittels druckluftunterstützt erfolgt, wobei die Dosiermittelpumpe (15) druckluftbetätigt ist, **dadurch gekennzeichnet, dass** die Luftpumpe (7) eine eine Saugleitung und eine Druckleitung (11) aufweisende Kolbenpumpe ist und dass eine Mischkammer (23) vorgesehen ist, die mit der Dosiermittelpumpe (15) und der Luftpumpe (7) verschaltet ist (bisherige Ansprüche 1, 4 und 7).

2. Dosiersystem nach Anspruch 1,
**dadurch gekennzeichnet, dass** die Luftpumpe (7) eine gemeinsame Druckluftquelle für die Bereitstellung von Druckluft für die druckluftunterstützte Eindüsung des Reduktionsmittels und die Druckluftbetätigung der Dosiermittelpumpe (15) ist.

3. Dosiersystem nach Anspruch 1 oder 2,
**dadurch gekennzeichnet, dass** die Dosiermittelpumpe (15) eine Membranpumpe ist.

4. Dosiersystem nach einem der vorherigen Ansprüche,
**dadurch gekennzeichnet, dass** die Dosiermittelpumpe (15) an die Luftpumpe (7) angebaut ist.

5. Dosiersystem nach einem der vorhergehenden Ansprüche,
**dadurch gekennzeichnet, dass** in die Druckleitung (11) der Luftpumpe (7) ein Ventil (14), insbesondere ein 2/2 Wegeventil, eingeschaltet ist.

6. Dosiersystem nach einem der vorhergehenden Ansprüche,
**dadurch gekennzeichnet, dass** in die Druckleitung (11) ein Druckluftspeicher (24) eingeschaltet ist.

7. Dosiersystem nach einem der vorhergehenden Ansprüche,
**dadurch gekennzeichnet, dass** in die Saugleitung und die Druckleitung (11) je ein Rückschlagventil (12a, 12b) eingesetzt ist.

8. Dosiersystem nach einem der vorhergehenden Ansprüche,
**dadurch gekennzeichnet, dass** in die Saugleitung und die Druckleitung (11) jeweils eine Drossel (13a, 13b) eingesetzt ist.

9. Dosiersystem nach Anspruch 7 oder 8,
**dadurch gekennzeichnet, dass** das Rückschlagventil (12a, 12b) jeweils eine Rückstellfeder aufweist.

10. Verfahren zum Betreiben eines Dosiersystems zur Eindüsung eines Reduktionsmittels, insbesondere einer Harnstoff-Wasser-Lösung, in eine Abgasleitung (4) einer Brennkraftmaschine (1), wobei das Dosiersystem ein mit einem Sprührohr (5) über zumindest eine Dosiermittelpumpe (15) verbundenen Reduktionsmitteltank (19) aufweist, wobei weiterhin eine Luftpumpe (7) zur Erzeugung von Druckluft vorgesehen ist, und die Eindüsung des Reduktionsmittels druckluftunterstützt erfolgt, **dadurch gekennzeichnet, dass** die Dosiermittelpumpe (15) von der durch die Luftpumpe (7) erzeugten Druckluft betätigt wird, wobei die Luftpumpe (7) eine eine Saugleitung und eine Druckleitung (11) aufweisende Kolbenpumpe ist, und wobei eine Mischkammer (23) vorgesehen ist, die mit der Dosiermittelpumpe (15) und der Luftpumpe (7) verschaltet ist.

## Claims

1. Dosing system for injecting a reducing agent, in particular a urea-water solution, into an exhaust line (4) of an internal combustion engine (1), wherein the dosing system has a reducing agent tank (19) which is connected to a spray pipe (5) via at least one dosing medium pump (15), wherein furthermore, an air pump (7) for generating compressed air is provided, and the injection of the reducing agent is performed in compressed-air-assisted fashion, wherein the dosing medium pump (15) is actuated by compressed air,
**characterized in that** the air pump (7) is a piston pump which has a suction line and a pressure line (11), and **in that** a mixing chamber (23) is provided which is connected to the dosing medium pump (15) and to the air pump (7) (previous Claims 1, 4 and 7).

2. Dosing system according to Claim 1,
**characterized in that** the air pump (7) is a common compressed-air source for the provision of compressed air for the compressed-air-assisted injection of the reducing agent and for the actuation, by compressed air, of the dosing medium pump (15).

3. Dosing system according to Claim 1 or 2,
**characterized in that** the dosing medium pump (15) is a diaphragm pump.

4. Dosing system according to one of the preceding claims, **characterized in that** the dosing medium pump (15) is mounted on the air pump (7).

5. Dosing system according to one of the preceding claims, **characterized in that** a valve (14), in particular a 2/2 directional valve, is incorporated into the pressure line (11) of the air pump (7).

6. Dosing system according to one of the preceding claims, **characterized in that** a compressed-air accumulator (24) is incorporated into the pressure line (11).

7. Dosing system according to one of the preceding claims, **characterized in that** in each case one check valve (12a, 12b) is inserted into the suction line and into the pressure line (11).

8. Dosing system according to one of the preceding claims, **characterized in that** in each case one throttle (13a, 13b) is inserted into the suction line and into the pressure line (11).

9. Dosing system according to Claim 7 or 8,
**characterized in that** the check valve (12a, 12b) has in each case one restoring spring.

10. Method for operating a dosing system for injecting a reducing agent, in particular a urea-water solution, into an exhaust line (4) of an internal combustion engine (1), wherein the dosing system has a reducing agent tank (19) which is connected to a spray pipe (5) via at least one dosing medium pump (15), wherein furthermore, an air pump (7) for generating compressed air is provided, and the injection of the reducing agent is performed in compressed-air-assisted fashion,
**characterized in that** the dosing medium pump (15) is actuated by the compressed air generated by the air pump (7), wherein the air pump (7) is a piston pump which has a suction line and a pressure line (11), and wherein a mixing chamber (23) is provided which is connected to the dosing medium pump (15) and to the air pump (7).

## Revendications

1. Système de dosage destiné à injecter un agent réducteur, en particulier une solution d'urée aqueuse, dans une conduite de gaz d'échappement (4) d'un moteur à combustion interne (1), le système de dosage présentant un réservoir d'agent réducteur (19) connecté à un tube pulvérisateur (5) par le biais d'au moins une pompe d'agent de dosage (15), une pompe à air (7) étant en outre prévue pour générer de l'air sous pression, et l'injection de l'agent réducteur s'effectuant avec l'assistance d'air sous pression, la pompe d'agent de dosage (15) étant actionnée par l'air sous pression, **caractérisé en ce que** la pompe à air (7) est une pompe à piston présentant une conduite d'aspiration et une conduite de pression (11) et **en ce qu'**une chambre de mélange (23) est prévue, laquelle est branchée en circuit avec la pompe d'agent de dosage (15) et la pompe à air (7) (antérieurement revendications 1, 4 et 7).

2. Système de dosage selon la revendication 1, **caractérisé en ce que** la pompe à air (7) est une source d'air sous pression commune pour fournir de l'air sous pression pour l'injection de l'agent réducteur assistée par air sous pression et pour l'actionnement par air sous pression de la pompe d'agent de dosage (15).

3. Système de dosage selon la revendication 1 ou 2, **caractérisé en ce que** la pompe d'agent de dosage (15) est une pompe à membrane.

4. Système de dosage selon l'une quelconque des revendications précédentes, **caractérisé en ce que** la pompe d'agent de dosage (15) est montée sur la pompe à air (7).

5. Système de dosage selon l'une quelconque des revendications précédentes, **caractérisé en ce que** dans la conduite de pression (11) de la pompe à air (7) est montée une soupape (14), en particulier une soupape à 2/2 voies.

6. Système de dosage selon l'une quelconque des revendications précédentes, **caractérisé en ce qu'**un accumulateur d'air sous pression (24) est monté dans la conduite de pression (11).

7. Système de dosage selon l'une quelconque des revendications précédentes, **caractérisé en ce qu'**un clapet antiretour (12a, 12b) est inséré à chaque fois dans la conduite d'aspiration et la conduite de pression (11).

8. Système de dosage selon l'une quelconque des revendications précédentes, **caractérisé en ce qu'**un étranglement respectif (13a, 13b) est inséré dans la conduite d'aspiration et la conduite de pression (11).

9. Système de dosage selon la revendication 7 ou 8, **caractérisé en ce que** le clapet antiretour (12a, 12b) présente à chaque fois un ressort de rappel.

10. Procédé pour faire fonctionner un système de dosage pour injecter un agent réducteur, en particulier une solution d'urée aqueuse dans une conduite de gaz d'échappement (4) d'un moteur à combustion interne (1), le système de dosage présentant un réservoir d'agent réducteur (19) connecté à un tube de pulvérisation (5) par le biais d'au moins une pompe d'agent de dosage (15), une pompe à air (7) étant en outre prévue pour générer de l'air sous pression, et l'injection de l'agent réducteur s'effectuant de manière assistée par air sous pression, **caractérisé en ce que** la pompe d'agent de dosage (15) est actionnée par l'air sous pression généré par la pompe à air (7), la pompe à air (7) étant une pompe à piston présentant une conduite d'aspiration et une conduite de pression (11), et une chambre de mélange (23) étant prévue, laquelle est montée en circuit avec la pompe d'agent de dosage (15) et la pompe à air (7).
